# EUROPEAN PATENT SPECIFICATION

(11) **EP 2 936 979 B1**
(45) Date of publication and mention of the grant of the patent: **26.12.2018**
(21) Application number: 15158711.0
(22) Date of filing: 11.03.2015
(51) Int. Cl.: A01K 89/01

(54) **Spool for fishing reel**
Spule einer Angelrolle
Bobine pour moulinet de pêche

(30) Priority: 31.03.2014 JP 2014073976; 31.03.2014 JP 2014073977
(43) Date of publication of application: 28.10.2015
(73) Proprietor: Globeride, Inc., Tokyo 203-8511 (JP)
(72) Inventor: Takamatsu, Nobuaki, Tokyo, 203-8511 (JP); Naito, Hideyuki, Tokyo, 203-8511 (JP); Noda, Takahito, Tokyo, 203-8511 (JP)
(74) Representative: Boult Wade Tennant LLP

(56) References cited:
- JP-A- 2010 154 780
- JP-A- 2011 245 139
- JP-U- S6 342 070
- US-A- 6 164 577

## Description

### TECHNICAL FIELD

The present invention relates to a spool for fishing.

### BACKGROUND

Some spools for fishing to be installed in a fishing reel (hereinafter referred to simply as "spools") have a shell formed of a plurality of prepreg sheets circumferentially continuous to each other (see Patent Literature 1). Such spools having a spool body formed of prepreg sheets have a smaller weight than those having a metal spool.

These spools have a cylindrical shell around which a fishing line is to be wound. Further, the spools additionally have a flange portion arising from an end of the shell and a skirt portion extending from an outer circumferential end of the flange portion in a direction opposite to the shell.

Spools are typically formed of a metal material; but more emphasis is recently placed on research and development of spools formed of prepreg sheets for weight reduction. For example, Patent Literature 1 discloses fabrication of a spool body including a shell, a flange portion, and a skirt portion integrated together by rolling prepreg sheets on an inner die and heat pressing the prepreg sheets.

### RELEVANT REFERENCES

### LIST OF RELEVANT PATENT LITERATURE

Patent Literature 1: Japanese Patent No. 5290723. JP 2010 154780 A relates to a spinning spool and method for producing the same.

### SUMMARY

However, when neighboring prepreg sheets overlap with each other at ends thereof as described above, the rigidity of the joint between the prepreg sheets varies depending on the angle at which the fibers in the prepreg sheets cross each other. The variance in rigidity between joints causes unevenness of the rigidity in the shell.

Further, when a prepreg sheet is bent to form the angle between the sheet and the flange portion and the angle between the flange portion and the skirt portion, the fibers in the prepreg sheet may be broken to reduce the strength at the angles. Hereinafter, the angle between the shell and the flange portion may be referred to as "inner circumferential angle," and the angle between the flange portion and the skirt portion may be referred to as "outer circumferential angle," and the "inner circumferential angle" and the "outer circumferential angle" may be collectively referred to simply as "angles."

An object of the present invention is to improve such a spool that is formed of prepreg sheets.

That is, an object of the present invention is to provide a spool for fishing free of the above problem about the rigidity of the shell and having an enhanced rigidity of the shell in a well balanced manner.

Further, the present invention is intended to prevent the reduction in strength of the angles described above; and an object of the present invention is to provide a spool including a spool body formed of prepreg sheets and having
angles with a high strength.

To achieve the above objects, the present invention provides a spool, according to claim 1, configured to be installed in a fishing reel and including a spool body having a frusto-conical shell around which a fishing line is wound. The shell is formed by heat pressing a laminate including a plurality of prepreg sheets rolled one over another. The prepreg sheets have the same arcuate shape and the same fiber orientation. The prepreg sheets are rolled in the same direction to form a frusto-conical shape. The joints where both ends of the prepreg sheets overlap with each other are arranged at regular intervals in the circumferential direction of the shell.

In this arrangement, a plurality of prepreg sheets can be rolled one over another to increase the rigidity of the shell. Since the prepreg sheets have the same arcuate shape and the same fiber orientation, the fibers in the joints overlap with each other in the same manner. That is, the angles at which the fibers in the joints cross each other are the same. Thus, the joints of prepreg sheets have the same rigidity. Since the joints are arranged at regular intervals in the circumferential direction of the shell, the rigidity of the shell can be increased in a well balanced manner. The prepreg sheets have the same arcuate shape and the same fiber orientation and are rolled in the same direction; and the prepreg sheets are stacked one over another at positions separated by regular intervals in the circumferential direction of the shell. Therefore, the wall portions between the joints arranged in the circumferential direction of the shell include the fibers of the prepreg sheets overlapping each other in the same manner. That is, the wall portions between the joints arranged in the circumferential direction of the shell include the fibers crossing each other at the same angle. Thus, the rigidity of the shell can be increased in a well balanced manner, and the rigidity of the shell in the circumferential direction can be increased; therefore, the shell can be resistant to twist and compression.

In the above spool, if the angle at which the edge of one end of a prepreg sheet crosses the fibers is equal to the angle at which the edge of the other end of the prepreg sheet crosses the fibers, the angle of the fiber orientation at the joints is equal to the angle of the fiber orientation at the wall portions adjacent to the joints. Thus, there is only a small difference in rigidity between the joints and the wall portions adjacent to the joints, and the rigidity of the shell can be increased in a balanced manner.

In the above spool, if at least one of the prepreg sheets include fibers continuous across both ends of the prepreg sheet, the shell has an increased rigidity in the circumferential direction and is resistant to twist and compression. In particular, if all the prepreg sheets include fibers continuous across both ends of the prepreg sheets, the shell has a further increased rigidity in the circumferential direction.

The spool of a reference example is a spool configured to be installed in a fishing reel, comprising a spool body including: a cylindrical shell formed of one or more prepreg sheets heat pressed; an intermediate member formed of a metal material and positioned on one end side of the shell in an axial direction; and a skirt portion positioned opposite to the shell with respect to the intermediate member and constituted by a cylindrical member formed of the prepreg sheets heat pressed, wherein the intermediate member includes: a flange portion having a cylindrical shape and extending from the shell radially outward; a small diameter joint extending from an inner circumferential end of the flange portion and joined
to the shell; and a large diameter joint extending from an outer circumferential end of the flange portion and joined to the skirt portion.

In the above arrangement, the inner circumferential angle of the spool body includes a small diameter joint and a flange portion; and the outer circumferential angle of the spool body includes a large diameter joint and the flange portion. Since the small diameter joint, the flange portion, and the large diameter portion forming the angles are made of a metal material (an intermediate member), the angles have a high strength. Meanwhile, since the shell and the skirt portion are formed of prepreg sheets, the spool has a smaller weight than conventional ones entirely formed of a metal material.

In the above reference example, the thickness of the flange portion in the axial direction should preferably be larger than the thickness of the small diameter joint in the radial direction and the thickness of the large diameter joint in the radial direction.

The shell and the skirt portion, both having a cylindrical shape, are formed of the same prepreg sheets but have different radial lengths; therefore, the shell and the skirt portion are deformed to different degrees under a load from radial outside. Thus, the flange portion connecting the shell and the skirt portion undergoes a large load. However, since the above arrangement increases the rigidity of the flange portion, there is extremely low possibility that the flange portion is broken under a large load.

### ADVANTAGES

The present invention improves a spool formed of prepreg sheets.

That is, in the spool of the present invention, the rigidity of the shell can be increased in a well balanced manner, and the rigidity of the shell in the circumferential direction can be increased; therefore, the shell can be resistant to twist and compression.

Further, in the reference example, the angles of the spool body have a high strength, and thus the spool body has a high durability and safety. Also, the reduced weight enables improvement of operability of the fishing reel.

Further, in the reference example, the flange portion has a high rigidity, and thus the spool body has a high durability and safety.

### BRIEF DESCRIPTION OF THE DRAWINGS

Fig. 1 shows the entirety of the fishing reel according to an embodiment of the present invention.
Fig. 2a is a perspective view of the spool of the embodiment; and Fig. 2b is a side sectional view of the same.
Fig. 3a shows body sheets; Fig. 3b shows the first body sheet; and Fig. 3c shows the joint of the first body sheet.
Fig. 4 shows rolling of the first body sheet on an inner die.
Figs. 5a to 5d show stacking of the body sheets, wherein Fig. 5a is a sectional view after the first body sheet is rolled; Fig. 5b is a sectional view after the second body sheet is rolled; Fig. 5c is a sectional view after the third body sheet is rolled; and Fig. 5d is a sectional view after the fourth body sheet is rolled.
Fig. 6a shows exterior sheets; Fig. 6b is a sectional view after the first exterior sheet is rolled; and Fig. 6c is a sectional view after the second exterior sheet is rolled.
Figs. 7a to 7c show another embodiment, wherein Fig. 7a shows body sheets; Fig. 7b shows the first body sheet; and Fig. 7c shows the joint of the first body sheet.
Fig. 8a is a perspective view of the spool of the embodiment; and Fig. 8b is an exploded perspective view of the spool body of the embodiment.
Fig. 9a is a side sectional view of the spool of the embodiment; and Fig. 9b is an enlarged view of the portion encircled with the broken line in Fig. 9a.
Fig. 10a shows body sheets; Fig. 10b shows the first body sheet; and Fig. 10c shows the joint of the first body sheet.
Fig. 11 shows rolling of the first body sheet on a die.
Figs. 12a to 12d show stacking of the body sheets, wherein Fig. 12a is a sectional view after the first body sheet is rolled; Fig. 12b is a sectional view after the second body sheet is rolled; Fig. 12c is a sectional view after the third body sheet is rolled; and Fig. 12d is a sectional view after the fourth body sheet is rolled.
Fig. 13a shows exterior sheets; Fig. 13b is a sectional view after the first exterior sheet is rolled; and Fig. 13c is a sectional view after the second exterior sheet is rolled.
Figs. 14a to 14c show another embodiment, wherein Fig. 14a shows body sheets; Fig. 14b shows the first body sheet; and Fig. 14c shows the joint of the first body sheet.

### DESCRIPTION OF EXAMPLE EMBODIMENTS

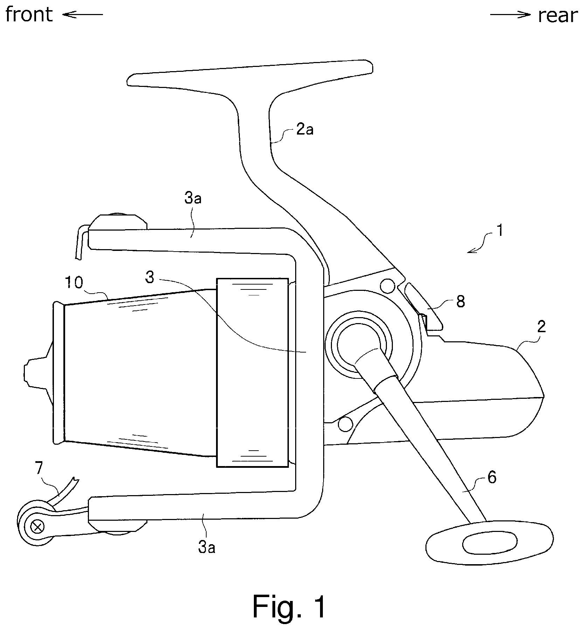

The embodiments will be hereinafter described in detail with reference to the drawings. The fishing reel 1 according to the embodiment shown in Fig. 1 may be a spinning reel mainly including a reel body 2, a rotor 3 provided in front of the reel body 2 so as to be rotatable, and a spool 10 in front of the reel body 2 so as to be movable back and forth. In the following description, the directions referred to as "front and rear" are based on those shown in Fig. 1.

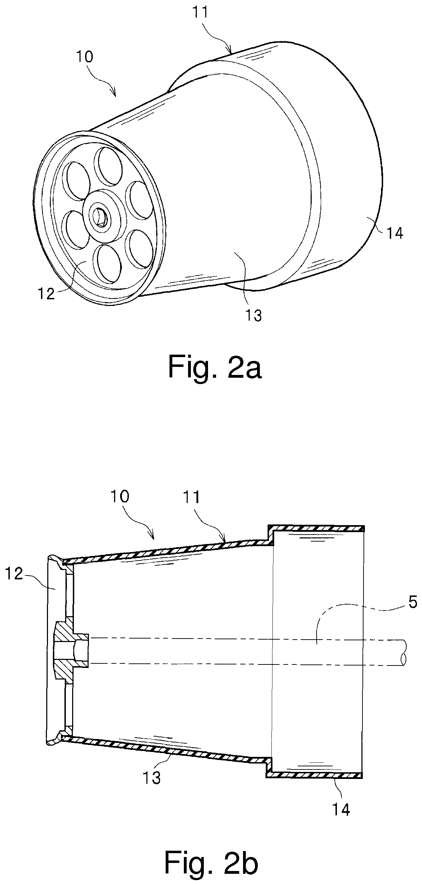

On top of the reel body 2 may be provided a leg 2a to be mounted on a fishing rod (not shown). A spool shaft 5 (see Fig. 2b) may be projected forward from the front end of the reel body 2. Additionally, the reel body 2 may accommodate an oscillating device (not shown) for reciprocating the spool shaft 5 back and forth.

In the fishing reel 1, rotation of the handle 6 provided on the side of the reel body 2 may cause rotation of the rotor 3. The spool 10 may be configured to reciprocate back and forth in synchronization with rotation of the rotor 3. While the spool 10 reciprocates back and forth, a bail 7 provided on a pair of arms 3a, 3a of the rotor 3 may guide the fishing line such that the fishing line is evenly wound around the outer circumferential surface of the spool 10.

The fishing reel 1 can be switched between a state where the rotor 3 is prohibited from rotating reversely and a state where the rotor 3 is permitted to rotate positively and reversely, by switching the switch lever 8 provided on the rear portion of the reel body 2. In casting a tackle for example, the fishing line can be released from the spool 10 by setting the bail 7 at a position opposite to the line winding position shown in Fig. 1 and retaining the bail 7 so as not to inhibit releasing of the fishing line.

As shown in Fig. 2a, the spool 10 may include a spool body 11 having a cylindrical shape and a front wall member 12 mounted on the front end opening portion of the spool body 11. The front wall member 12 may be constituted by a disk-like metal member formed of, e.g., an aluminum alloy. The rear end of the front wall member 12 may be adhered to the front end opening portion of the spool body 11.

As shown in Fig. 2b, the front end of the spool shaft 5 may be connected to the central portion of the front wall member 12. The spool 10 may be configured to be reciprocated along with the spool shaft 5 by the oscillating device (not shown) in the reel body 2.

As shown in Fig. 2a, the spool body 11 may include a shell 13 having a frusto-conical shape and a skirt portion 14 formed on the rear end of the shell 13. The fishing line may be wound around the outer circumferential surface of the shell 13.

The diameter of the shell 13 is gradually larger from the front end toward the rear end. Since the outer circumferential surface of the shell 13 is formed in a frusto-conical shape (a tapered shaped), the fishing line can be released smoothly.

The skirt portion 14 may be continuous to the rear end of the shell 13 and have a larger diameter than the shell 13. The skirt portion 14 may prevent the fishing line from entering the spool 10.

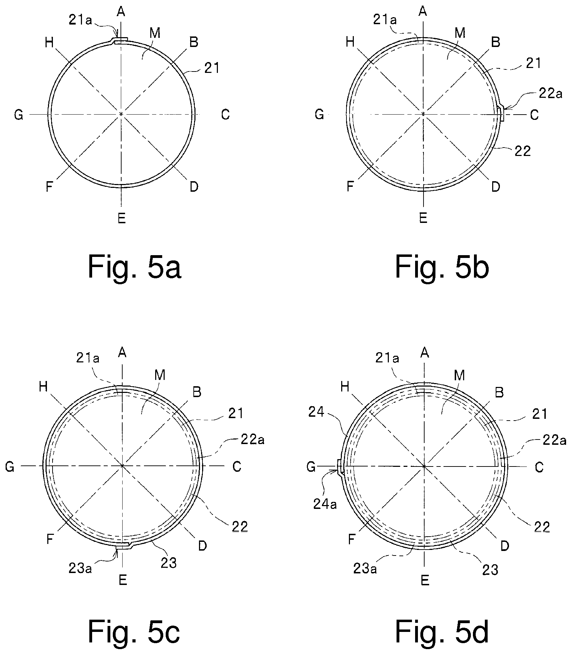

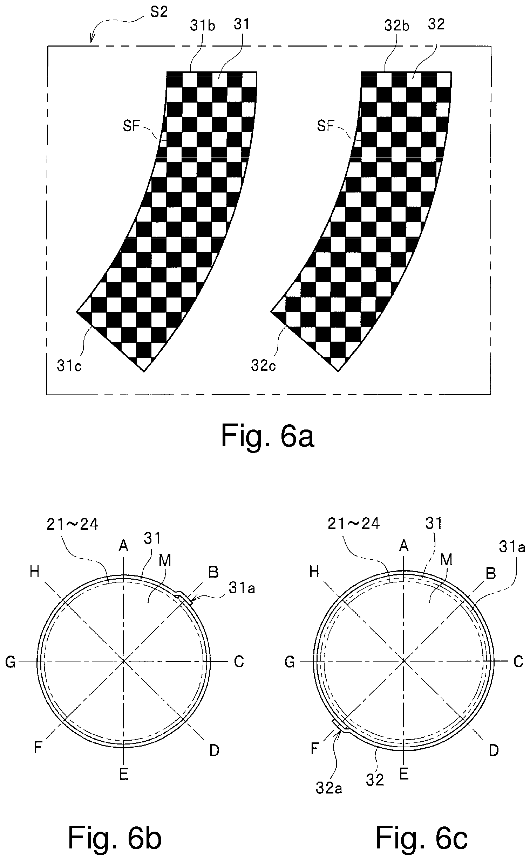

The shell 13 of the embodiment may be formed by heat pressing a laminate including four body sheets 21 to 24 (see Fig. 5d) and two exterior sheets 31, 32 (see Fig. 6c) rolled one over another.

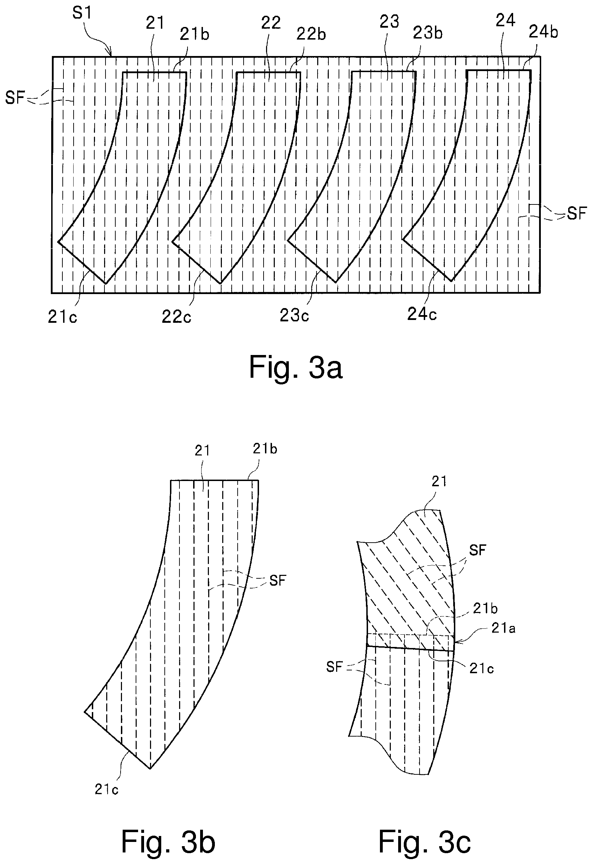

As shown in Fig. 3a, the body sheets 21 to 24 may be arcuate prepreg sheets (fiber-reinforced resin sheets). The body sheets 21 to 24 may have the same shape.
The body sheets 21 to 24 of the embodiment may be formed of prepreg sheets including an epoxy resin and carbon fibers.

The body sheets 21 to 24 of the embodiment may be cut out from the same sheet S1. The sheet S1 may be a prepreg sheet wherein the fiber orientations SF, SF are the same (the vertical direction in Fig. 3a).

The body sheets 21 to 24 in the sheet S1 are oriented orthogonal to the fiber orientation SF. The body sheets 21 to 24 may have the same orientation. The body sheets 21 to 24 cut out from the sheet S1 may have the same fiber orientation SF. In the body sheets 21 to 24 of the embodiment, the edges 21b to 24b of the ends in the longitudinal direction may be orthogonal to the fiber orientation SF, and the edges 21c to 24c of the other ends may be oblique to the fiber orientation SF.

As shown in Fig. 6a, the two exterior sheets 31, 32 may be arcuate prepreg sheets (fiber-reinforced resin sheets). The exterior sheets 31, 32 may have the same shape. The exterior sheets 31, 32 of the embodiment may be formed of prepreg sheets including an epoxy resin and carbon fibers.

In the exterior sheets 31, 32, the vertical and horizontal fiber orientations SF may be orthogonal to each other, producing a lattice pattern in the surface. As shown in Fig. 6c, the exterior sheets 31, 32 may be rolled on the body sheets 21 to 24. Like the body sheets 21 to 24 (see Fig. 3a), the exterior sheets 31, 32 may be cut out from the same sheet S2 and have the same fiber orientation SF. In the exterior sheets 31, 32 of the embodiment, the edges 31b, 32b of the ends in the longitudinal direction may be orthogonal and parallel to the fiber orientations SF, and the edges 31c, 32c of the other ends may be oblique to the fiber orientations SF.

Next, the process of forming the shell 13 will be described. Figs. 5a to 5d and Figs. 6b and 6c exaggerate the thickness of the body sheets 21 to 24 and the exterior sheets 32, 32 for elucidation of stacking of the body sheets 21 to 24 and the exterior sheets 31, 32.

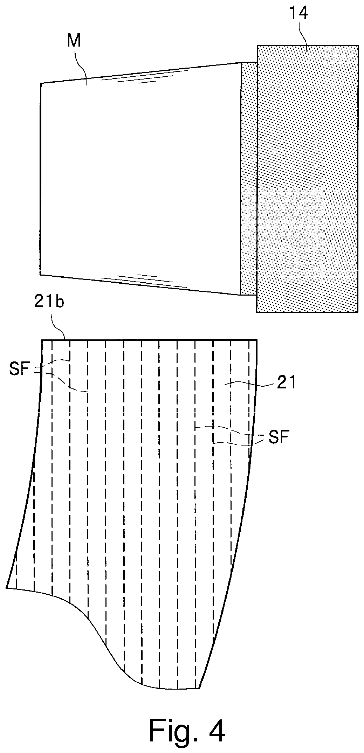

In the embodiment as shown in Fig. 4, an inner die M having the same shape as the spool body 11 (see Fig. 2a) may be used to shape the body sheets 21 to 24 (see Fig. 5d) and the exterior sheets 31, 32 (see Fig. 6c). The inner die M may previously have prepreg sheets rolled thereon for constituting the skirt portion 14.

First, the first body sheet 21 for constituting the innermost layer may be rolled on the outer circumferential surface of the inner die M. As shown in Fig. 5a, the first body sheet 21 may be rolled from the position A, and both ends of the first body sheet 21 may overlap with each other at the position A. Thus, the first body sheet 21 may be rolled into a frusto-conical shape. As shown in Fig. 3c, in the joint 21a where both ends of the first body sheet 21 overlap with each other, the fiber orientations SF, SF in both ends cross each other.

Next, as shown in Fig. 5b, the second body sheet 22 may be rolled on the outer circumferential surface of the first body sheet 21. The second body sheet 22 may be rolled from the position C, and both ends of the second body sheet 22 may overlap with each other at the position C. The position C may be 90° away from the position A in the circumferential direction (clockwise in Fig. 5b). Thus, the joint 22a where both ends of the second body sheet 22 overlap with each other may be positioned 90° away from the joint 21a of the first body sheet 21 in the circumferential direction.

In the joint 22a of the second body sheet 22, the fiber orientations SF, SF in both ends cross each other, as in the joint 21a of the first body sheet 21 (see Fig. 3c). The angle at which the fiber orientations SF, SF cross each other in the joint 22a of the second body sheet 22 may be equal to the angle at which the fiber orientations SF, SF cross each other in the joint 21a of the first body sheet 21 (see Fig. 3c).

Next, as shown in Fig. 5c, the third body sheet 23 may be rolled on the outer circumferential surface of the second body sheet 22. The third body sheet 23 may be rolled from the position E, and both ends of the third body sheet 23 may overlap with each other at the position E. The position E may be 90° away from the position C in the circumferential direction (clockwise in Fig. 5c). Thus, the joint 23a of the third body sheet 23 may be positioned 90° away from the joint 22a of the second body sheet 22 in the circumferential direction. The angle at which the fiber orientations SF, SF cross each other in the joint 23a of the third body sheet 23 may be equal to the angle at which the fiber orientations SF, SF cross each other in the joint 21a of the first body sheet 21 (see Fig. 3c).

Next, as shown in Fig. 5d, the fourth body sheet 24 may be rolled on the outer circumferential surface of the third body sheet 23. The fourth body sheet 24 may be rolled from the position G, and both ends of the fourth body sheet 24 may overlap with each other at the position G. The position G may be 90° away from the position E in the circumferential direction (clockwise in Fig. 5d). Thus, the joint 24a of the fourth body sheet 24 may be positioned 90° away from the joint 23a of the third body sheet 23 in the circumferential direction. The angle at which the fiber orientations SF, SF cross each other in the joint 24a of the fourth body sheet 24 may be equal to the angle at which the fiber orientations SF, SF cross each other in the joint 21a of the first body sheet 21 (see Fig. 3c).

The body sheets 21 to 24 may thus be rolled and stacked in the radial direction. Next, as shown in Fig. 6b, the first exterior sheet 31 may be rolled on the outer circumferential surface of the laminate including the body sheets 21 to 24. The first exterior sheet 31 may be rolled from the position B, and both ends of the first exterior sheet 31 may overlap with each other at the position B. The position B may be 45° away from the position A in the circumferential direction (clockwise in Fig. 6b). In the joint 31a of the first exterior sheet 31, the fiber orientations SF, SF in both ends of the first exterior sheet 31 may cross each other.

Next, as shown in Fig. 6c, the second exterior sheet 32 may be rolled on the outer circumferential surface of the first exterior sheet 31. The second exterior sheet 32 may be rolled from the position F, and both ends of the second exterior sheet 32 may overlap with each other at the position F. The position F may be 180° away from the position B in the circumferential direction (clockwise in Fig. 6c). Thus, the joint 32a of the second exterior sheet 32 may be positioned 180° away from the joint 31a of the first exterior sheet 31 in the circumferential direction. The angle at which the fiber orientations SF, SF cross each other in the joint 32a of the second exterior sheet 32 may be equal to the angle at which the fiber orientations SF, SF cross each other in the joint 31a of the first exterior sheet 31.

The two exterior sheets 31, 32 may thus be rolled on the laminate including the body sheets 21 to 24 so as to be stacked in the radial direction; a fastening tape may be continuously rolled on the outer circumferential surface of the second exterior sheet 32; and then the body sheets 21 to 24 and the exterior sheets 31, 32 may be heat pressed to integrate the exterior sheets 31, 32, the body sheets 21 to 24, and the skirt portion 14 (see Fig. 4). Thus, a shell 13 (see Fig. 2a) may be formed of the four body sheets 21 to 24 and the two exterior sheets 31, 32 stacked in the radial direction.

As shown in Fig. 6c, the shell 13 (see Fig. 2a) in the spool 10 may be formed of the four body sheets 21 to 24 and the two exterior sheets 31, 32 stacked in the radial direction; therefore, the shell 13 may have a high rigidity.

As shown in Fig. 3a, the body sheets 21 to 24 in the spool 10 have, according to the invention, the same arcuate shape and the same fiber orientation SF. Therefore, the fibers may overlap with each other in the same manner in the joints 21a to 24a of the body sheets 21 to 24 (see Fig. 5d). That is, the angles at which the fibers in the joints 21a to 24a (see Fig. 5d) cross each other are the same. As shown in Fig. 6a, the exterior sheets 31, 32 have the same arcuate shape and the same fiber orientation SF. Therefore, in the joints 31a, 32a of the exterior sheets 31, 32 (see Fig. 6c), the fibers may overlap with each other in the same manner and thus cross each other at the same angle.

Thus, in the spool 10, the joints 21a to 24a of the body sheets 21 to 24 shown in Fig. 5d may have the same rigidity; and the joints 31a, 32a of the exterior sheets 31, 32 shown in Fig. 6c may have the same rigidity. As shown in Figs. 5d and 6c, the joints 21a to 24a of the body sheet 21 to 24 and the joints 31a, 32a of the exterior sheets 31, 32 are arranged at regular intervals in the circumferential direction of the shell 13 (see Fig. 2a).

Further, as shown in Fig. 5d, the body sheets 21 to 24 are rolled in the same direction and stacked one over another at positions separated by regular intervals in the circumferential direction of the shell 13. Therefore, the wall portions between the joints 21a to 24a arranged in the circumferential direction of the shell 13 (the wall portions from A to C, from C to E, from E to G, and from G to A) may include the fibers of the body sheets 21 to 24 stacked in the same manner. That is, the wall portions between the joints 21a to 24a arranged in the circumferential direction of the shell 13 may include the fibers crossing each other at the same angle. Thus, the wall portions between the joints 21a to 24a arranged in the circumferential direction of the shell 13 may have the same rigidity.

Similarly, as shown in Fig. 5d, the exterior sheets 31, 32 are rolled in the same direction and stacked one over the other at positions separated by regular intervals in the circumferential direction of the shell 13. Therefore, the wall portions between the joints 31a, 32a arranged in the circumferential direction of the shell 13 (the wall portions from B to F and from F to B) may include the fibers of the exterior sheets 31, 32 stacked in the same manner. That is, the wall portions between the joints 31a, 32a arranged in the circumferential direction of the shell 13 include the fibers crossing each other at the same angle. Thus, the wall portions between the joints 31a, 32a arranged in the circumferential direction of the shell 13 may have the same rigidity.

Therefore, in the spool 10 of the embodiment, the rigidity of the shell 13 shown in Fig. 2a can be increased in a well balanced manner, and the rigidity of the shell 13 in the circumferential direction can be increased; therefore, the shell 13 can be resistant to twist and compression.

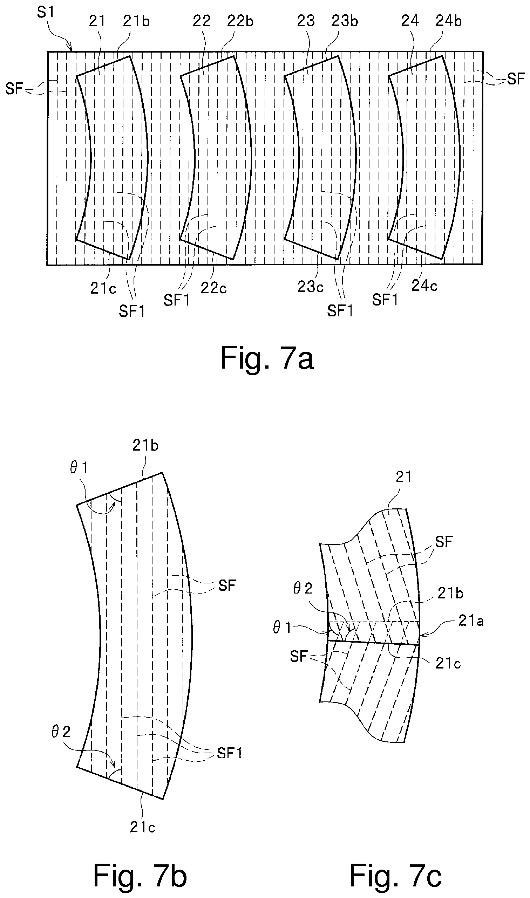

Embodiments of the present invention are not limited to the above descriptions and are susceptible to appropriate modifications within the purport of the present invention. For example, as shown in Fig. 7a, the angle θ1 at which the edges 21b to 24b of the ends of the prepreg sheets 21 to 24 cross the fiber orientation SF may be equal to the angle θ2 at which the edges 21c to 24c of the other ends of the prepreg sheets 21 to 24 cross the fiber orientation SF. In this arrangement as shown in Fig. 7c, the angle of the fiber orientation SF in the joint 21a may be equal to the angle of the fiber orientation SF in the wall portion adjacent to the joint 21a. Therefore, there is only a small difference in rigidity between the joint 21a and the wall portions adjacent to the joint 21a, and the rigidity of the shell 13 (see Fig. 2a) can be increased in a balanced manner.

As shown in Fig. 7b, if the prepreg sheet 21 includes fibers SF1 continuous across both ends of the prepreg sheet 21, the fibers SF1 may be continuous in the circumferential direction when the prepreg sheet 21 is rolled. In this arrangement, the shell 13 (see Fig. 2a) may have a high rigidity in the circumferential direction and can be resistant to twist and compression. In particular, as shown in Fig. 7a, if all of the four prepreg sheets 21 to 24 include fibers SF1 continuous across both ends of the prepreg sheets 21 to 24, the shell 13 (see Fig. 2a) may have a further increased rigidity in the circumferential direction.

In the embodiment, the four body sheets 21 to 24 may be stacked as shown in Fig. 5c, and the two exterior sheets 31, 32 may be stacked as shown in Fig. 6c; but the numbers of the body sheets and the exterior sheets are not limited.

In the embodiment, the body sheets 21 to 24 and the exterior sheets 31, 32 may be formed of the prepreg sheets including an epoxy resin and carbon fibers; but the types of the resin and the reinforcement fibers are not limited.

An embodiment of the reference example will be hereinafter described in detail with reference to the drawings. The fishing reel 1 according to the embodiment shown in Fig. 1 may be a spinning reel mainly including a reel body 2, a rotor 3 provided in front of the reel body 2 so as to be rotatable, and a spool 10 in front of the reel body 2 so as to be movable back and forth.

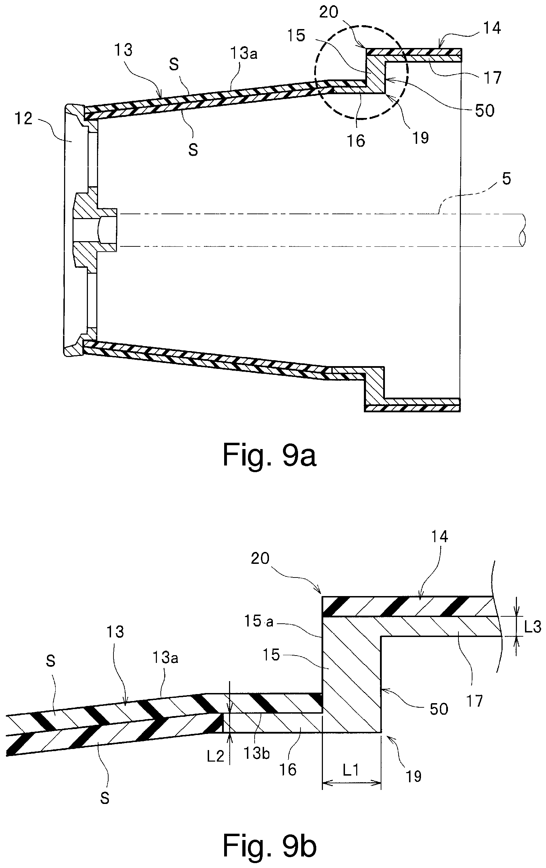

On top of the reel body 2 may be provided a leg 2a to be mounted on a fishing rod (not shown). A spool shaft 5 (see Fig. 9a) may be projected forward from the front end of the reel body 2. Additionally, the reel body 2 may accommodate an oscillating device (not shown) for reciprocating the spool shaft 5 back and forth.

In the fishing reel 1, rotation of the handle 6 provided on the side of the reel body 2 may cause rotation of the rotor 3, and the fishing line may be guided by a bail 7 placed between a pair of arms 3a, 3a of the rotor 3 and may be wound around the outer circumferential surface of the spool 10. Further, since the spool 10 is moved back and forth in synchronization with the rotation of the rotor 3, the fishing line may be evenly wound around the outer circumferential surface of the spool 10.

The fishing reel 1 can be switched between a state where the rotor 3 is prohibited from rotating reversely and a state where the rotor 3 is permitted to rotate positively and reversely, by switching the switch lever 8 provided on the rear portion of the reel body 2. In casting a tackle for example, the fishing line can be released from the spool 10 by setting the bail 7 at a position opposite to the line winding position shown in Fig. 1 and retaining the bail 7 so as not to inhibit releasing of the fishing line.

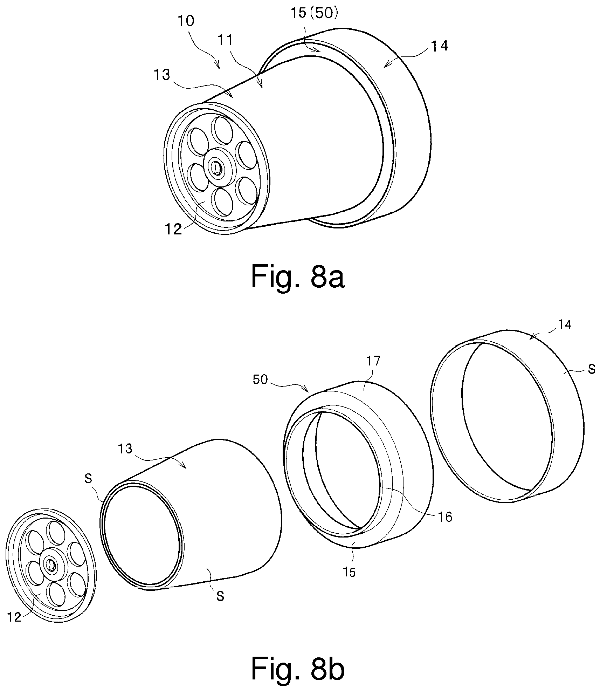

As shown in Figs. 8a and 9a, the spool 10 may include a spool body 11 having a cylindrical shape and a front wall member 12 mounted on the front end opening portion of the spool body 11. The front wall member 12 may be formed of a metal material and have a disk-like shape. The rear end of the front wall member 12 may be fitted into the front end opening portion of the spool body 11 and fixed thereon with an adhesive.

As shown in Fig. 9a, the front end of the spool shaft 5 may be connected to the central portion of the front wall member 12. The spool 10 may be configured to be reciprocated along with the spool shaft 5 by the oscillating device (not shown) in the reel body 2.

As shown in Figs. 9a and 9b, the spool body 11 may include an inner circumferential angle 19 protruding inward and an outer circumferential angle 20 protruding outward on the rear end side of the cylindrical shape. As shown in Fig. 8a and 8b, the spool body 11 may be constituted by three members: a shell 13 having a frusto-conical shape, an intermediate member 50 having a cylindrical shape and positioned behind the shell 13, and a skirt portion 14 having a cylindrical shape and covering the intermediate member 50.

The fishing line is to be wound around the outer circumferential surface 13a of the shell 13. As shown in Fig. 9a, the diameter of the shell 13 may be gradually larger from the front end toward the rear end; and the outer circumferential surface 13a of the shell 13 may have a frusto-conical (tapered) shape. Therefore, the fishing line can be released smoothly.

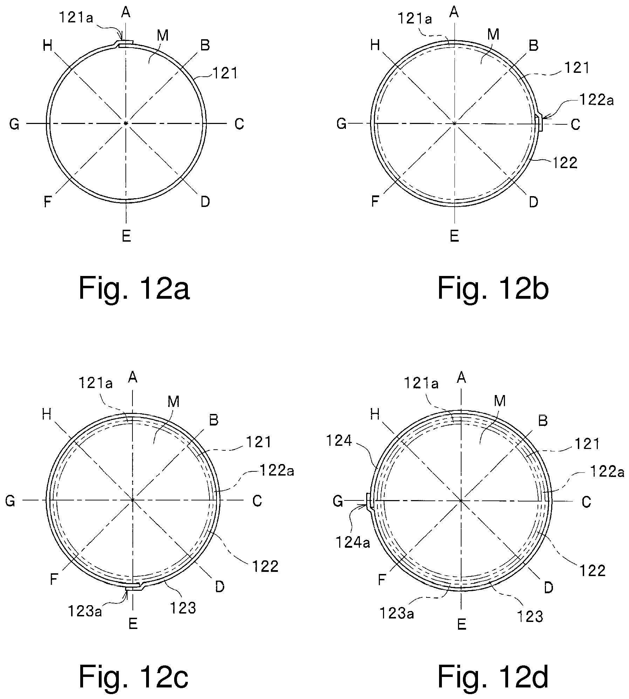

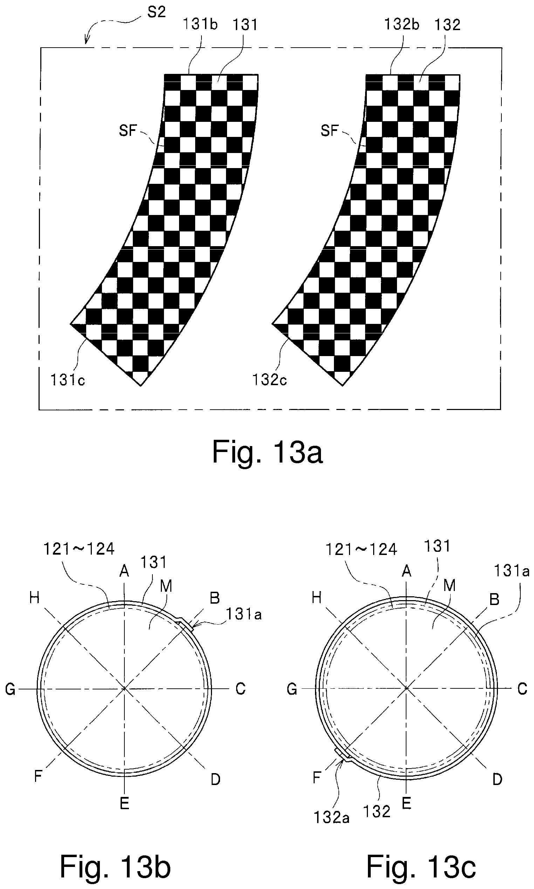

The shell 13 may be formed by placing the prepreg sheets (fiber-reinforced resin sheets) S on the inner die having a frusto-conical shape, fastening the prepreg sheets S with a fastening tape, and then heat pressing the prepreg sheets S. A non-limiting example of the prepreg sheets S may be those including an epoxy resin and carbon fibers. The shell 13 may be a laminate including a plurality of prepreg sheets S stacked together and having a higher strength than a single-layered prepreg sheet. More specifically, the shell 13 of the embodiment may be formed by heat pressing a laminate including four body sheets 121 to 124 (see Fig. 12d) and two exterior sheets 131, 132 (see Fig. 13c) rolled one over another. Fig. 9 shows the shell 13 as including one body sheet and one exterior sheet stacked together for elucidation of stacking.

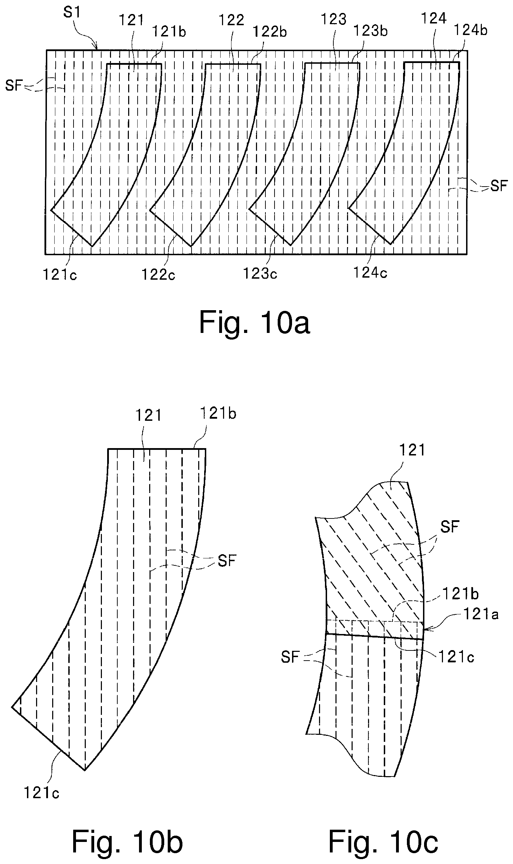

As shown in Fig. 10a, the body sheets 121 to 124 may be arcuate prepreg sheets. The body sheets 121 to 124 may have the same shape.

The body sheets 121 to 124 of the embodiment may be cut out from the same sheet S1. The sheet S1 may be a prepreg sheet wherein the fiber orientations SF, SF are the same (the vertical direction in Fig. 10a).

The body sheets 121 to 124 in the sheet S1 may be oriented orthogonal to the fiber orientation SF. The body sheets 121 to 124 may have the same orientation. The body sheets 121 to 124 cut out from the sheet S1 may have the same fiber orientation SF. In the body sheets 121 to 124 of the embodiment, the edges 121b to 124b of the ends in the longitudinal direction may be orthogonal to the fiber orientation SF, and the edges 121c to 124c of the other ends may be oblique to the fiber orientation SF.

As shown in Fig. 13a, the two exterior sheets 131, 132 may be arcuate prepreg sheets (fiber-reinforced resin sheets). The exterior sheets 131, 132 may have the same shape. The exterior sheets 131, 132 of the embodiment may be formed of prepreg sheets including an epoxy resin and carbon fibers.

In the exterior sheets 131, 132, the vertical and horizontal fiber orientations SF may be orthogonal to each other, producing a lattice pattern in the surface. As shown in Fig. 13c, the exterior sheets 131, 132 may be rolled on the body sheets 121 to 124. Like the body sheets 121 to 124 (see Fig. 10a), the exterior sheets 131, 132 may be cut out from the same sheet S2 and have the same fiber orientation SF. In the exterior sheets 131, 132 of the embodiment, the edges 131b, 132b of the ends in the longitudinal direction may be orthogonal and parallel to the fiber orientations SF, and the edges 131c, 132c of the other ends may be oblique to the fiber orientations SF.

The intermediate member 50 may be formed of a metal member. In the present invention, the intermediate member 50 should preferably have a high strength; but any desirably material can be used without limitation as long as it has a strength higher than a predetermined value. As shown in Fig. 9a, the intermediate member 50 may include a flange portion 15 having a cylindrical shape and extending radially outside the outer circumferential surface 13a of the shell 13, a small diameter joint 16 extending forward from the inner circumferential end of the flange portion 15, and a large diameter joint 17 extending rearward from the outer circumferential end of the flange portion 15.

As shown in Fig. 9b, the thickness L1 of the flange portion 15 in the axial direction (the front-rear direction) may be larger than the thickness L2 of the small diameter joint 16 in the radial direction and the thickness L3 of the large diameter joint 17 in the radial direction.

The small diameter joint 16 may have a cylindrical shape. As shown in Fig. 9a, the outer diameter of the small diameter joint 16 may be equal to the inner diameter of the shell 13 at the rear end thereof, and the inner circumferential surface of the shell 13 at the rear end thereof may be joined to the outer circumferential surface of the small diameter joint 16. Thus, the shell 13 and the intermediate member 50 may be integrated together, the shell 13 and the flange portion 15 may be orthogonal to each other, and the inner circumferential angle 19 of the spool body 11 may be formed. As shown in Fig. 9b, a recess 13c upwardly depressed may be formed in the inner circumferential surface of the shell 13 on the rear end side thereof, and a small diameter joint 16 may be accommodated in the recess 13c such that the inner circumferential surface of the shell 13 may be flush with the inner circumferential surface of the small diameter joint 16.

The rear end of the shell 13 joined to the small diameter joint 16 may contact with the front surface 15a of the flange portion 15, and the outer circumferential surface 13a of the shell 13 may be continuous to the front surface 15a of the flange portion 15. Therefore, the entirety of the outer circumferential surface of the small diameter joint 16 may be covered by the shell 13. Since the outer circumferential surface 13a of the shell 13 is continuous to the front end 15a of the flange portion 15, the front surface 15a of the flange portion 15 may rise radially outward beyond the outer circumferential surface 13a of the shell 13. Therefore, a fishing line moving rearward along the outer circumferential surface 13a of the shell 13 may be locked by the front surface 15a of the flange portion 15 such that the fishing line may not drop off the shell 13.

The large diameter joint 17 may have a cylindrical shape with a diameter larger than that of the small diameter joint 16.

The skirt portion 14 may be formed by placing rectangular prepreg sheets S on an inner die, fastening the prepreg sheets S with a fastening tape, and then heat pressing the prepreg sheets S. As shown in Figs. 9a and 9b, the inner diameter of the skirt portion 14 may be equal to the outer diameter of the large diameter joint 17, and the outer circumferential surface of the large diameter joint 17 may be joined to the inner circumferential surface of the skirt portion 14. Thus, the skirt portion 14 and the intermediate member 50 may be integrated together, the flange portion 15 and the skirt portion 14 may be orthogonal to each other, and the outer circumferential angle 20 of the spool body 11 may be formed. Further, since the skirt portion 14 is integrated with the intermediate member 50, the skirt portion 14 may extend rearward from the outer circumferential end of the front surface 15a of the flange portion 15 so as to prevent a fishing line from turning from the rear side into the inner circumferential side of the shell 13.

The length of the skirt portion 14 in the front-rear direction may be equal to the length of the large diameter joint 17 in the front-rear direction; and the skirt portion 14 may cover the outer circumferential surface of the large diameter joint 17. Therefore, since the large diameter joint 17 made of a metal material and having a high strength may be disposed on the inner circumferential side of the skirt portion 14, the skirt portion 14 may have a single layer formed only of the exterior prepreg sheet S.

Next, the process of forming the shell 13 on the intermediate member 50 will be described. Figs. 12a to 12d and Figs. 13b and 13c exaggerate the thickness of the body sheets 121 to 124 and the exterior sheets 132, 132 for elucidation of stacking of the body sheets 121 to 124 and the exterior sheets 131, 132.

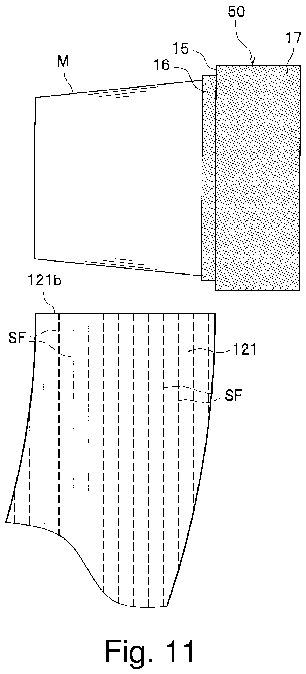

In the embodiment as shown in Fig. 11, an inner die M having the same shape as the spool body 11 (see Fig. 8a) may be used to shape the body sheets 121 to 124 (see Fig. 12d) and the exterior sheets 131, 132 (see Fig. 13c). The intermediate member 50 may be fitted around the large diameter side of the inner die M such that the small diameter joint 16 of the intermediate member 50 faces the small diameter side of the inner die M.

First, the first body sheet 121 for constituting the innermost layer may be rolled on the outer circumferential surface of the inner die M. As shown in Fig. 12a, the first body sheet 121 may be rolled from the position A, and both ends of the first body sheet 121 may overlap with each other at the position A. Thus, the first body sheet 121 may be rolled into a frusto-conical shape. As shown in Fig. 10c, in the joint 121a where both ends of the first body sheet 121 overlap with each other, the fiber orientations SF, SF in both ends cross each other.

Next, as shown in Fig. 12b, the second body sheet 122 may be rolled on the outer circumferential surface of the first body sheet 121. The second body sheet 122 may be rolled from the position C, and both ends of the second body sheet 122 may overlap with each other at the position C. The position C is 90° away from the position A in the circumferential direction (clockwise in Fig. 12b). Thus, the joint 122a where both ends of the second body sheet 122 overlap with each other may be positioned 90° away from the joint 121a of the first body sheet 121 in the circumferential direction.

In the joint 122a of the second body sheet 122, the fiber orientations SF, SF in both ends cross each other, as in the joint 121a of the first body sheet 121 (see Fig. 10c). The angle at which the fiber orientations SF, SF cross each other in the joint 122a of the second body sheet 122 may be equal to the angle at which the fiber orientations SF, SF cross each other in the joint 121a of the first body sheet 121 (see Fig. 10c).

Next, as shown in Fig. 12c, the third body sheet 123 may be rolled on the outer circumferential surface of the second body sheet 122. The third body sheet 123 may be rolled from the position E, and both ends of the third body sheet 123 may overlap with each other at the position E. The position E may be 90° away from the position C in the circumferential direction (clockwise in Fig. 12c). Thus, the joint 123a of the third body sheet 123 may be positioned 90° away from the joint 122a of the second body sheet 122 in the circumferential direction. The angle at which the fiber orientations SF, SF cross each other in the joint 123a of the third body sheet 123 may be equal to the angle at which the fiber orientations SF, SF cross each other in the joint 121a of the first body sheet 121 (see Fig. 10c).

Next, as shown in Fig. 12d, the fourth body sheet 124 may be rolled on the outer circumferential surface of the third body sheet 123. The fourth body sheet 124 may be rolled from the position G, and both ends of the fourth body sheet 124 may overlap with each other at the position G. The position G may be 90° away from the position E in the circumferential direction (clockwise in Fig. 12d). Thus, the joint 124a of the fourth body sheet 124 may be positioned 90° away from the joint 123a of the third body sheet 123 in the circumferential direction. The angle at which the fiber orientations SF, SF cross each other in the joint 124a of the fourth body sheet 124 may be equal to the angle at which the fiber orientations SF, SF cross each other in the joint 121a of the first body sheet 121 (see Fig. 10c).

The body sheets 121 to 124 may thus be rolled and stacked in the radial direction. Next, as shown in Fig. 13b, the first exterior sheet 131 may be rolled on the outer circumferential surface of the laminate including the body sheets 121 to 124. The first exterior sheet 131 may be rolled from the position B, and both ends of the first exterior sheet 131 may overlap with each other at the position B. The position B may be 45° away from the position A in the circumferential direction (clockwise in Fig. 13b). In the joint 131a of the first exterior sheet 131, the fiber orientations SF, SF in both ends of the first exterior sheet 131 may cross each other.

Next, as shown in Fig. 13c, the second exterior sheet 132 may be rolled on the outer circumferential surface of the first exterior sheet 131. The second exterior sheet 132 may be rolled from the position F, and both ends of the second exterior sheet 132 may overlap with each other at the position F. The position F may be 180° away from the position B in the circumferential direction (clockwise in Fig. 13c). Thus, the joint 132a of the second exterior sheet 132 may be positioned 180° away from the joint 131a of the first exterior sheet 131 in the circumferential direction. The angle at which the fiber orientations SF, SF cross each other in the joint 132a of the second exterior sheet 132 may be equal to the angle at which the fiber orientations SF, SF cross each other in the joint 131a of the first exterior sheet 131.

The two exterior sheets 131, 132 may thus be rolled on the laminate including the body sheets 121 to 124 so as to be stacked in the radial direction; a fastening tape may be continuously rolled on the outer circumferential surface of the second exterior sheet 132; and then the body sheets 121 to 124 and the exterior sheets 131, 132 may be heat pressed to integrate the exterior sheets 131, 132, the body sheets 121 to 124, and the intermediate member 50 (see Fig. 11). Thus, a shell 13 (see Fig. 9a) may be formed of the four body sheets 121 to 124 and the two exterior sheets 131, 132 stacked in the radial direction.

In the spool 10 according to the embodiment, the inner circumferential angle 19 of the spool body 11 may include the flange portion 15 and the small diameter joint 16; and the outer circumferential angle 20 of the spool body 11 includes a large diameter joint 17 and the flange portion 15. These angles (the inner circumferential angle 19 and the outer circumferential angle 20) may be formed of the intermediate member 50 constituted by a metal member and have a high strength. Meanwhile, since the shell 13 and the skirt portion 14 are formed of prepreg sheets S, the spool body may have a smaller weight than conventional ones entirely formed of a metal material. Therefore, the spool body 11 may have an excellent durability and safety and increase the operability of the fishing reel 1.

The shell 13 and the skirt portion 14, both having a cylindrical shape, may be formed of the same prepreg sheets S but have different radial lengths; therefore, the shell 13 and the skirt portion 14 may have different rigidities with respect to a load from radial outside. Therefore, the shell 13 and the skirt portion 14 may be deformed to different degrees under the load, and the flange portion 15 connecting the shell 13 and the skirt portion 14 may undergo a large load. However, in the spool 10 according to the embodiment, the flange portion 15 may have a large thickness L1 in the axial direction (in the front-rear direction) that may increase the rigidity of the flange 15. Thus, the flange portion 15 is less prone to be broken under a large load, and the spool body 11 may have an extremely high durability and safety.

As shown in Fig. 13c, the shell 13 (see Fig. 9a) in the spool 10 may be formed of the four body sheets 121 to 124 and the two exterior sheets 131, 132 stacked in the radial direction; therefore, the shell 13 may have a high rigidity.

As shown in Fig. 10a, the body sheets 121 to 124 in the spool 10 may have the same arcuate shape and the same fiber orientation SF. Therefore, the fibers may overlap with each other in the same manner in the joints 121a to 124a of the body sheets 121 to 124 (see Fig. 12d). That is, the angles at which the fibers in the joints 121a to 124a (see Fig. 12d) cross each other may be the same. As shown in Fig. 13a, the exterior sheets 131, 132 may have the same arcuate shape and the same fiber orientation SF. Therefore, in the joints 131a, 132a of the exterior sheets 131, 132 (see Fig. 13c), the fibers may overlap with each other in the same manner and thus cross each other at the same angle.

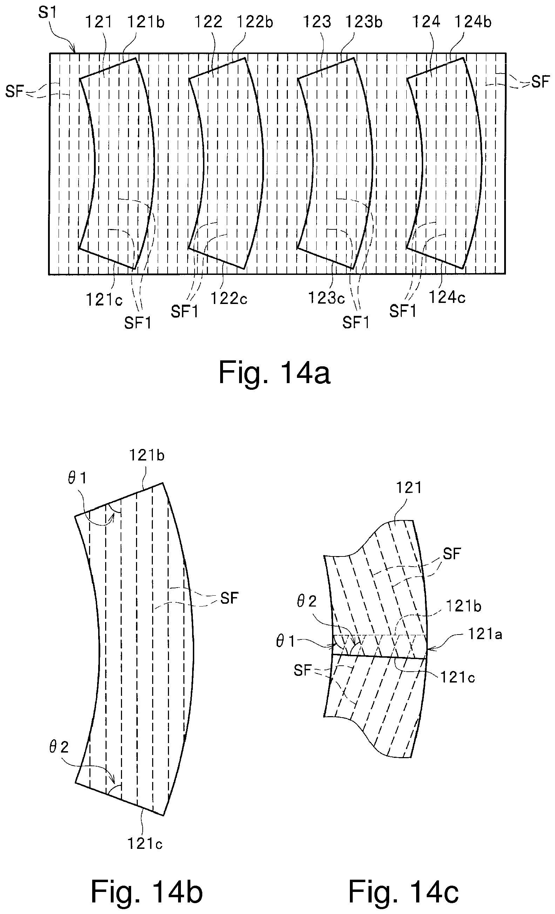

Thus, in the spool 10, the joints 121a to 124a of the body sheets 121 to 124 shown in Fig. 12d may have the same rigidity; and the joints 131a, 132a of the exterior sheets 131, 132 shown in Fig. 13c may have the same rigidity. As shown in Figs 12d and 13c, the joints 121a to 124a of the body sheet 121 to 124 and the joints 131a, 132a of the exterior sheets 131, 132 may be arranged at regular intervals in the circumferential direction of the shell 13 (see Fig. 14a).

Further, as shown in Fig. 12d, the body sheets 121 to 124 may be rolled in the same direction and stacked one over another at positions separated by regular intervals in the circumferential direction of the shell 13. Therefore, the wall portions between the joints 121a to 124a arranged in the circumferential direction of the shell 13 (the wall portions from A to C, from C to E, from E to G, and from G to A) may include the fibers of the body sheets 121 to 124 stacked in the same manner. That is, the wall portions between the joints 121a to 124a arranged in the circumferential direction of the shell 13 may include the fibers crossing each other at the same angle. Thus, the wall portions between the joints 121a to 124a arranged in the circumferential direction of the shell 13 may have the same rigidity.

Similarly, as shown in Fig. 12d, the exterior sheets 131, 132 may be rolled in the same direction and stacked one over the other at positions separated by regular intervals in the circumferential direction of the shell 13. Therefore, the wall portions between the joints 131a, 132a arranged in the circumferential direction of the shell 13 (the wall portions from B to F and from F to B) may include the fibers of the exterior sheets 131, 132 stacked in the same manner. That is, the wall portions between the joints 131a, 132a arranged in the circumferential direction of the shell 13 may include the fibers crossing each other at the same angle. Thus, the wall portions between the joints 131a, 132a arranged in the circumferential direction of the shell 13 may have the same rigidity.

Therefore, in the spool 10 of the embodiment, the rigidity of the shell 13 shown in Fig. 14a can be increased in a well balanced manner, and the rigidity of the shell 13 in the circumferential direction can be increased; therefore, the shell 13 can be resistant to twist and compression.

The reference example is not limited to the above description about the spool 10 according to the embodiment. For example, instead of the feature that only the front surface 15a of the flange portion 15 is not covered and exposed outside (see Fig. 9), an epoxy resin or a prepreg sheet S may be placed on this portion. Further, The inner circumferential side of the intermediate member 50, which is not covered in the embodiment, may be covered with a prepreg sheet S.

For example, as shown in Fig. 14a, the angle θ1 at which the edges 121b to 124b of the ends of the prepreg sheets 121 to 124 cross the fiber orientation SF may be equal to the angle θ2 at which the edges 121c to 124c of the other ends of the prepreg sheets 121 to 124 cross the fiber orientation SF. In this arrangement, the angle of the fiber orientation SF in the joint 121a may be equal to the angle of the fiber orientation SF in the wall portions adjacent to the joint 121a. Therefore, there is only a small difference in rigidity between the joint 121a and the wall portions adjacent to the joint 121a, and the rigidity of the shell 13 (see Figs. 14 and 9) can be increased in a balanced manner.

As shown in Fig. 14b, if the prepreg sheet 121 includes fibers SF1 continuous across both ends of the prepreg sheet 121, the fibers SF1 may be continuous in the circumferential direction when the prepreg sheet 121 is rolled. In this arrangement, the shell 13 (see Figs. 14 and 9) may have a high rigidity in the circumferential direction and can be resistant to twist and compression. In particular, as shown in Fig. 14a, if all of the four prepreg sheets 121 to 124 include fibers SF1 continuous across both ends of the prepreg sheets 121 to 124, the shell 13 (see Fig. 14a) may have a further increased rigidity in the circumferential direction.

In the embodiment, the four body sheets 121 to 124 may be stacked as shown in Fig. 12c, and the two exterior sheets 131, 132 may be stacked as shown in Fig. 13c; but the numbers of the body sheets and the exterior sheets are not limited.

### LIST OF REFERENCE NUMBERS

- 1: fishing reel
- 2: reel body
- 3: rotor
- 5: spool shaft
- 6: handle
- 10: spool
- 11: spool shaft
- 12: front wall member
- 13: shell
- 14: skirt portion
- 15: flange portion
- 16: small diameter joint
- 17: large diameter joint
- 19: inner circumferential angle
- 20: outer circumferential angle
- 21: first body sheet
- 22: second body sheet
- 23: third body sheet
- 24: fourth body sheet
- 21a to 24a: joints
- 31: first exterior sheet
- 32: second exterior sheet
- 31a, 32a: joints
- 50: intermediate member
- 121: body sheet (first body sheet)
- 122: second body sheet
- 123: third body sheet
- 124: fourth body sheet
- 131: exterior sheet (first exterior sheet)
- 132: second exterior sheet
- M: inner die
- S: prepreg sheet
- S1, S2: sheets

## Claims

1. A spool (10) configured to be installed in a fishing reel, comprising:
a spool body including a shell (13) around which a fishing line is to be wound, the shell (13) having a frusto-conical shape,
wherein the shell (13) is formed of a laminate including a plurality of prepreg sheets (S) rolled one over another and heat pressed, the prepreg sheets (S) being rolled into a frusto-conical shape,
**characterised in that**:
the prepreg sheets (S) have a same arcuate shape and a same fiber orientation (SF);
the prepreg sheets (S) are rolled in a same direction; and
joints (21a, 22a, 23a, 24a, 31a, 32a) where both ends of the prepreg sheets (S) overlap with each other are arranged at regular intervals in a circumferential direction of the shell (13).

2. The spool (10) of claim 1 wherein an angle at which an edge of one end of the prepreg sheets (S) crosses the fiber orientation (SF) is equal to an angle at which an edge of the other end of the prepreg sheets (S) crosses the fiber orientation (SF).

3. The spool (10) of claim 1 or 2 wherein at least one of the prepreg sheets (S) includes fibers continuous across both ends of the prepreg sheet (S).

## Patentansprüche

1. Spule (10), die zum Einsetzen in eine Angelrolle ausgebildet ist und die aufweist:
einen Spulenkörper, der einen Spulenmantel (13) aufweist, um den herum eine Angelschnur aufzuwickeln ist, wobei der Spulenmantel (13) die Form eines Kegelstumpfes besitzt,
wobei der Spulenmantel (13) aus einem Laminat ausgebildet ist, das eine Vielzahl von Prepreg-Bahnen (S) enthält, die übereinander gewickelt und heißverpresst sind, wobei die Prepreg-Bahnen (S) zu der Form eines Kegelstumpfes gewickelt sind,
**dadurch gekennzeichnet, dass**
die Prepreg-Bahnen (S) die gleiche bogenförmige Form und die gleiche Faserorientierung (SF) besitzen,
die Prepreg-Bahnen (S) in der gleichen Richtung gewickelt sind
und
Verbindungsstellen (21a, 22a, 23a, 24a, 31a, 32a), an denen die beiden Enden der Prepreg-Bahnen (S) einander überlappen, in regelmäßigen Abständen in einer Umfangsrichtung des Spulenmantels (13) angeordnet sind.

2. Spule (10) von Anspruch 1, bei welcher der Winkel, unter dem eine Kante eines Endes der Prepreg-Bahnen (S) die Faserorientierung (SF) kreuzt, gleich dem Winkel ist, unter dem eine Kante des anderen Endes der Prepreg-Bahnen (S) die Faserorientierung (SF) kreuzt.

3. Spule (10) von Anspruch 1 oder 2, bei der mindestens eine der Prepreg-Bahnen (S) Fasern enthält, die von Ende zu Ende der Prepreg-Bahn (S) durchlaufend sind.

## Revendications

1. Bobine (10) configurée pour être installée sur un moulinet de pêche, comprenant :
un corps de bobine comprenant une coque (13) autour de laquelle une ligne de pêche doit être enroulée, la coque (13) ayant une forme tronconique,
dans laquelle la coque (13) est formée avec un stratifié comprenant une pluralité de feuilles préimprégnées (S) enroulées les unes sur les autres et thermiquement compressées, les feuilles préimprégnées (S) étant enroulées selon une forme tronconique,
**caractérisée en ce que** :
les feuilles préimprégnées (S) ont une même forme arquée et une même orientation de fibre (SF) ;
les feuilles préimprégnées (S) sont enroulées dans une même direction ; et
des joints (21a, 22a, 23a, 24a, 31a, 32a) où les deux extrémités des feuilles préimprégnées (S) se chevauchent, sont agencés à intervalles réguliers dans une direction circonférentielle de la coque (13).

2. Bobine (10) selon la revendication 1, dans laquelle un angle auquel un bord d'une extrémité des feuilles préimprégnées (S) croise l'orientation de fibre (SF) est égal à un angle auquel un bord de l'autre extrémité des feuilles préimprégnées (S) croise l'orientation de fibre (SF).

3. Bobine (10) selon la revendication 1 ou 2, dans laquelle au moins l'une des feuilles préimprégnées (S) comprend des fibres continues d'un côté à l'autre des deux extrémités de la feuille préimprégnée (S).
